# EUROPEAN PATENT SPECIFICATION

(11) **EP 0 421 617 B1**
(45) Date of publication and mention of the grant of the patent: **20.04.1994**
(21) Application number: 90310007.1
(22) Date of filing: 13.09.1990
(51) Int. Cl.: G01D 9/00

(54) **Information recording apparatus**
Informationsaufzeichnungsgerät
Appareil d'enregistrement d'information

(30) Priority: 13.09.1989 GB 8920737; 20.09.1989 GB 8921243
(43) Date of publication of application: 10.04.1991
(73) Proprietor: HONEYWELL S.A., F-78190 Montigny Le Brettoneaus (FR)
(72) Inventor: Guillou, Jean Louis, F-80000 Amiens (FR); Gambier, Christine, F-59500 Douai (FR)
(74) Representative: Fox-Male, Nicholas Vincent Humbert

(56) References cited:
- COMPUTER DESIGN, vol. 21, no. 3, March 1982, Littleton, MA, US, pages 40-42: "Interface"
- PATENT ABSTRACTS OF JAPAN vol. 12, no. 228 (E-627) 28 June 1988, & JP-A-63020935
- Patent Abstracts of Japan, vol. 9, no. 154 (E-325), 28 June 1985 & JP-A-60 33760
- J.E.E. Journal of Electronic Engineering 22, (1985), February, no. 218, pp. 70-75

## Description

The present invention relates to electronic equipment and particularly to apparatus for the recording of information, especially chart recorders.

Conventionally, a chart recorder has one or more processors mounted on one or more printed circuit boards together with other electrical and electronic components, all connected together by circuitry and/or a common bus with double-buffer links (see for example Journal of Electronic Engineering, 22-1985 Feb No. 218 pp 70-75).

When designing a new piece of electronic equipment e.g. a chart recorder, it is important to determine what facilities are required and can be incorporated in the equipment for a given price to the customer. Often, it is considered appropriate to provide a number of versions of the product with differing facilities, chosen to attract a particular type of customer and/or to suit a specific niche in the market, and clearly the price of each version reflects the degree of facilities incorporated and the target market. Thus for example, there may be produced a range of equipment consisting of: a basic, low-cost model with minimal facilities; a medium-price model with three additional functions; a top-of-the-range model with four further functions, much increased application - flexibility and quality styling; and a
specialist model which has only two functions additional to the basic model but these, together with a particular display presentation and a rugged protective housing, makes it suited for a specific application at a premium cost. In this way, there can be developed a comprehensive range of products capable of seizing a substantial market share while incurring development costs substantially less than that for four separate models.

However in order to do this, conventionally the circuit design and the components of the basic model must be arranged such as to have the inherent flexibility for modification to the more sophisticated or more specialised models; accordingly, the basic model has elements or features which are not necessary to the functions it incorporates but which merely add to the cost of the basic model. Even if the selling price of the models are adjusted to ensure that the purchaser of the basic model does not subsidise the other models, the manufacturer loses some of the profit margin on the other models.

An object of the present invention is to provide apparatus which avoids the abovementioned disadvantages.

According to the present invention, there is provided apparatus for the recording of information, the apparatus comprising means to process information input to the apparatus and means to produce a permanent visible representation of information from the processing means, characterised in that the apparatus comprises a plurality of electronic elements, each having data storage means and microprocessor means for data processing, and serial ring means to link the elements within a single apparatus using a p.c.b.-based serial ring configuration.

Preferably, one of the electronic elements comprises means to process information input to the apparatus, another of the electronic elements comprises means to produce a permanent visible representation of information from the processing means.

In this way, a serial ring configuration is provided to connect various components of differing functionality.

Thus, the present invention may provide apparatus for the recording of information, the apparatus comprises a plurality of electronic elements, each having a separate functionality and each comprising data storage means and microprocessor means, and serial ring means to effect data signal communication between microprocessors of the electronic elements.

Preferably the apparatus comprises chart recorder apparatus with electronic means to print a chart recording information from the process means.

Accordingly, the present invention provides a design architecture for apparatus which ensures that the design of the product can be developed for the facilities which are relevant to that model alone and without regard to, or any concern as to, what further facilities or functionality are to be added to the basic design in order to produce more sophisticated models.

If it is desired to develop a more sophisticated model derived from the basic model, then it is necessary only to design the added functionality (typically additional electronic elements each with data storage means and data processor means) and then link it into the ring means, with no modification to the basic design.

While serial rings are known in the computer industry to link together separate computers and terminals (each of which is an fully-integrated self-sufficient unit, typically of similar functionality) which may be located in separate rooms, buildings or towns, and it is known to connect computers and peripherals in a closed arrangement (as shown in Computer Design, Vol 21 (1928) March, No. 3 pp 40, 42), the Applicant is not aware of any proposal, let alone a technically feasible implementation, for linking functionally-different electronic elements within a single electronic product using a p.c.b.-based serial ring configuration.

Thus, whereas a ring communication is known between micro computers, a distinction of the present invention is in perceiving the use of this in, and then adapting this type of communication to, microprocessors. The hardware and software of the product are then divided into separate modules, each module having a specific functionality, so another advantage of this approach is to decrease the development complexity and ensure that the development can be done more readily in that the various modules can be developed independantly and in parallel by separate groups of engineers. Furthermore, the addition of "intelligent" options can be done easily (e.g. opening the ring by cutting a strap) without burdening the cost of the basic model.

Preferably, the serial ring means comprises a two-wire ring suited to a token handing-on protocol for the transfer of signals.

One or more electronic elements for apparatus of the present invention may incorporate interface means to convert signals, which are processed within the element(s) into a format suitable for communication on the bus. Likewise there may be provided interface means to convert signals, which are in a format suitable for communication on the bus, into a format suitable for processing in one or more electronic elements.

Prefereably, a further one of said electronic elements comprises means to provide a display of information from the means to process information and/or of information from other of the electronic elements. Also, there may be a further one of said electronic elements comprising means to effect further processing and/or alternative processing on information input to the apparatus.

A preferred embodiment of the present invention provides: in a single piece of electronic equipment, e.g. a chart recorder, a number of data processing units of the same type and each with their own memory of the same type being connected together in a serial ring, each data processing unit and associated memory performing a specific different function in respect of operation of the electronic equipment.

In order that the invention may more readily be understood, a description is now given, by way of example only, reference being made to the accompanying drawings, in which:
Figure 1 is a schematic diagram of apparatus embodying the present invention;
Figure 2 is a block diagram representing a chart recorder embodying the present invention;
Figure 3 is a diagram showing a connection point on the ring bus of Figure 2;
Figure 4 is a diagram showing the connections between an independant module and the ring bus of Figure 2; and
Figure 5 shows the general structure of a ring bus message.

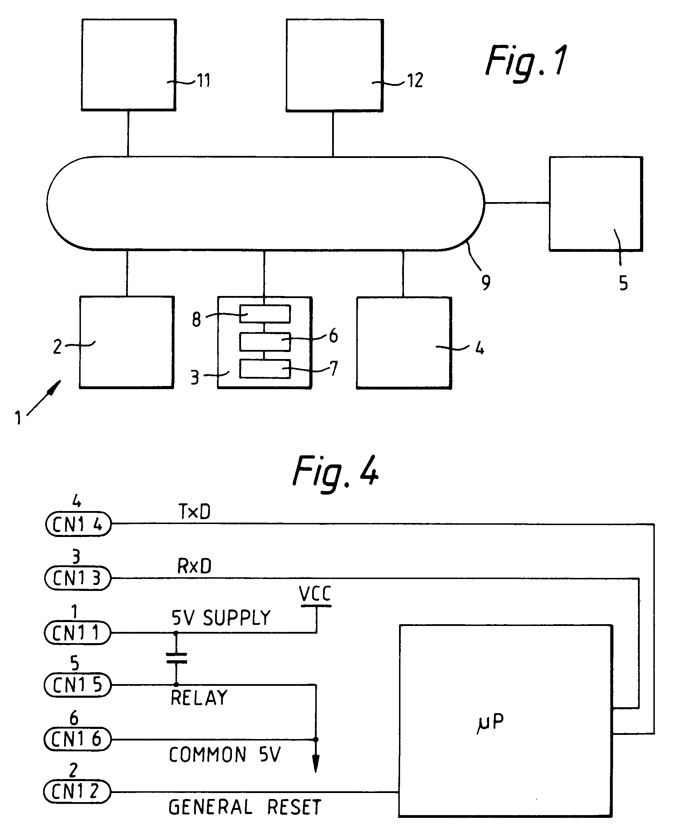

Figure 1 shows schematically an embodiment of the present invention being a device 1 for the recording of information from a industrial manufacturing plant and/or assembly line control system. The recorder has a number of units 2 to 5 each having a different function and each with its own data processor and data storage (for example those for unit 3 being shown by numerals 6 and 7 respectively, together with a signal interface unit 8); the data processors of all the units have essentially the same hardware but with different software, and likewise the data storage. Each of the units 2 to 5 are linked to a two-wire serial ring bus 9 which extends throughout the recorder 1 to provide communication between all the units; an appropriate form of ring is described later.

Information signals from the control system are received at the input unit 2 of recorder 1, where they are identified and are sorted, with the irrelevant signals extracted and the noise reduced where possible and appropriate. The unit 2 may also operate such as to scan the inputs to unit 2 in a given sequence and/or speed, and/or at predetermined intervals, for subsequent recordal and display; the unit 2 may also have the facility of noticing an alarm situation in relation to the value of a given input or to a particular set of inputs, and then producing an appropriate reaction, for example the sounding of an alarm or the recording of certain information.

Information from unit 2 passes onto the ring 9 and is then picked up by the processing unit 3 where it is processed into a format suitable for the production of a recording and for display, and there may be noise-reductive and extraction of extraneous signals in addition to and/or instead of those operations done in unit 2. Again, the signals from unit 3 are passed to ring 9 where they can be picked up, whether at the same time or otherwise, by unit 4 which produces a permanent representation and display unit 5 which provides a temporary display e.g. with LEDs. Unit 4 may be of any form suitable for providing the appropriate permanent image, for example it may be a pen and ink drawing unit to produce an ink chart, a printer to produce a trace thermally or by laser, a data store and display to hold a permanent electronic representation of the information, or photographic equipment to produce a photograph.

Display unit 5 may have a keyboard 10 to allow a user to input instructions, commands or information on the display operations or any other operations of the recorder; clearly, the keyboard and instruction operations can alternatively can be incorporated in a separate unit.

Such an arrangement for a recorder 1 provides substantial enhanced flexibility both in the design and development of the product, and the provision of additional features. Thus, for example, additional processing facilities can be readily added to the basic model by including an enhanced processing unit 11 which may add to, or replace, certain of the processing functions of unit 3. Furthermore, one or more units which provide new facilities can be added, for example a communications unit 12 which provides a communications link protocol allowing connection of the recorder 1 to other systems.

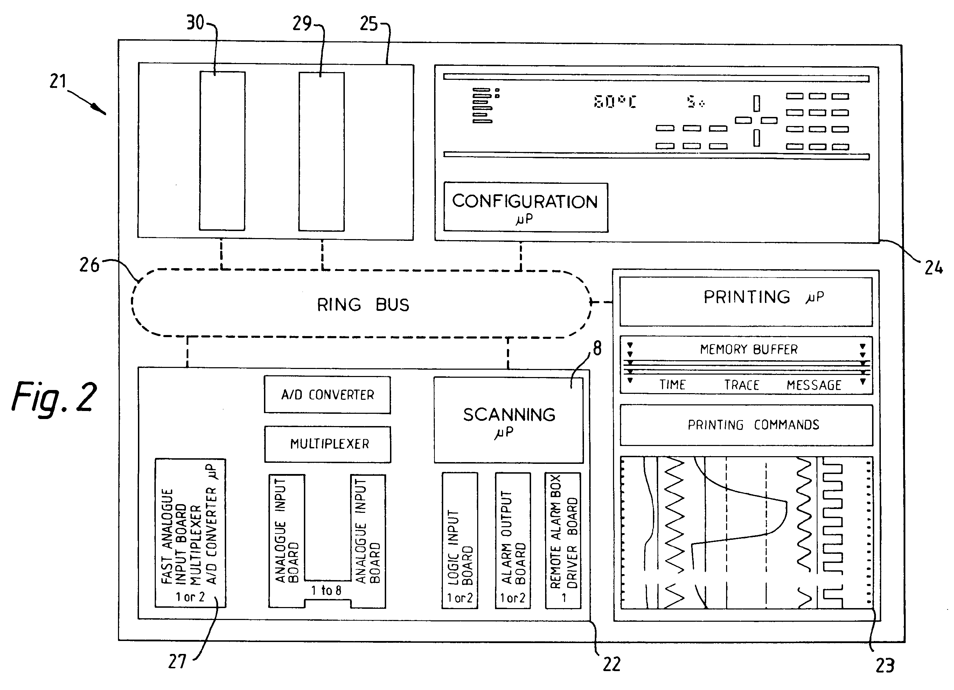

Figure 2 shows a chart recorder, generally designated as 21, whose circuit architecture employs several independent sections 22 to 25 that exchange data through an internal ring bus 26, each section having its own microprocessor, RAM and EPROM memories. The sections comprise: the Process interface section 22 which has a Fast Analogue Input unit 27 and also various inputs and outputs which connect with a Scanning unit 28, each of these units linking directly with the ring bus 26; the Printing section 23 which provides a chart print; the Display section 24 which provides an appropriate LED display; and the Auxiliary section 25 which optionally links a math extension module 29 and/or a communication module 30 to the ring bus 26.

The Process Interface section 22 can be tailored by selection of the appropriate number of input/output boards, namely:-
1. 4 analogue inputs (8 boards max.)
2. 6 digital inputs (2 boards max.)
3. 6 alarm relays (2 boards max.)
4. Remote alarm relay driver (1 board)
5. For high speed data acquisition, 1 or 2 fast scanning boards allowing analysis of 4 or 8 analogue inputs every second can be selected. Each board takes the slot locations of 2 standard analogue input boards.

In the Printing section 23, data from multiple origins (PV, computed, transmitted) is collected through the ring bus, analysed by powerful software and recorded on the chart clearly and simply for easy real-time operator viewing and accurate post process chart analysis. Alarm management is also under the control of this section.

In the Display section 24, process data is presented on two 16 characters LED displays, six additional LED's informing the operator of recorder status.

The keyboard is in-built and allows full configuration of the instrument through simple key stroke sequences.

In the Auxiliary board section 25, the functionality of chart recorder 11 can be extended by adding the following optional boards:
1. Math extension module 29.
2. A communications module 30, for example RS 422/RS 485 or Applicant's DMCS link.

Analogue data is collected either by the standard multiplexer or by the fast scanning boards. It is converted to digital format, linearized digitally filtered and expressed in engineering units. Math calculations provide for processing of high level parameters by combination of multiple inputs. The alarm algorithm sets alarm flags as appropriate and prints alarm messages.

Collected data is analysed by an advanced trace shaping algorithm that ensures accurate reproduction of the original signal, then loaded into the memory buffer along with the related alarm messages and chart format identifiers, and finally converted into print head and paper drive commands for accurate signal tracing and documentation.

The chart recorder 21 permits selection of 3 operating modes, namely:-
1. Configuration data for creation or update. It stops entirely the Run mode functions.
2. Configuration access mode. This mode allows the reading of all configuration data on the recorder display without interrupting data collection and printing. Modification of certain configuration parameters is also permitted.
3. Run mode. The run mode executes the following: collection of analogue and logic process data; formation and transmission of data; display of values and alarm status; execution of intermediate calculations; printing of data as required by the configured chart format.

At power on, chart recorder 21 automatically starts the autocheck procedure and after completion switches itself to the Run mode.

Chart recorder 21 can be configured to store process data while the tracing system is in standby; as long as it is not triggered by a preconfigured event when triggered, chart recorder 21 downloads the content of its memory on the chart, detailing the process variables and messages in the period leading up to the event and thereafter. Depending on the chart speed selected by the user, this can be equivalent to many hours of historical data or to very detailed minutes prior to the event.

The operator interface contributes greatly to ease of use and data legibility. It consists of a dual display, a simple keyboard and a string of 6 status LED's. The dual display consists of 2 rows of 16 alphanumeric characteristics and provides clear indication of channel data and of configuration prompts/parameters. In Run mode, it can show any of the following information sets which are easily selectable through operator action in one dedicated key:
1) Channel number, value, engineering unit, Date and time;
2) Channel number, value, engineering unit, chart speed;
3) Channel number, value, engineering unit, Tag name;
4) Alarm status, channel number, Overall alarm status;
5) Channel number, value, engineering unit, Digital inputs;
6) Channel number, value, engineering unit, Overall alarm status.

The operator keyboard consists of:
1) 6 yellow keys dedicated to the most common run mode actions: tabular printing (single shot); select displayed data; display scrolling hold; print inhibit; acknowledge of one alarm; acknowledge all alarms.
2) 4 blue "arrow" keys for moving across matrix menus in configuration mode or for manually scrolling through channel data in run mode.
3) 12 grey alpha-numeric keys to enter configuration data.

Chart recorder 21 uses several languages which are all resident in the instrument and are user selectable. They are employed for user prompting during configuration, operator information and printing of standard messages.

Chart recorder 21 accepts either roll or fan fold paper. Roll paper provides more legibility during operation, easier reading of historical data during operation and is less sensitive to the environment. On the other hand, fan folded paper is easier for data access when the chart is stored.

Paper is continuously sensed in the chart cassette and lack of paper is indicated. The writing mechanism is set to the standby position. Measured values are stored in memory allowing ample time for reloading the chart cassette and recording on the new chart all data measured during chart replacement.

In any ambient light condition, chart illumination makes the trend and the current values immediately visible, even from a distance.

The intermodule communication of chart recorder 21 is based on the concept of the "slotted ring" whereby messages, whose length is fixed, pass on the ring bus, each message using a "segment", the first bit giving the status of the segment (i.e. free or busy), several messages being sent on the ring bus at the same time.

When a module receives a message, it must read and decode the status bit. When the status bit is free: if the module has nothing to communicate, it just sends back the message as it is; if the module has something to send, it changes the status bit to busy and sends its message. When the status bit is busy: the module decodes the receiver address, and if the address is another module address, it just sends back the information; but if the address is its own address, it takes the message into account and sends back the message changing the status bit free. Only one module is in charge of generating the first empty status bits at power on and reset.

The message structure has a standard length of N bytes, including:-
- Byte 1 :: Status Bit and receiver address
- bit 7 :: status bit, "0" being free, "1" being busy
- bit 6 :: travel mode
0---> direct message, erased by the receiver
1---> circular message, erased by the transmitter
- bit 0 to 5 :: receiver address (0-64) in case the address is 0, the message is sent to all the other microprocessors connected on the ring bus. In that case the status bit is reset only by the transmitter.

Byte 2 : Transmitter address (1-64)
Bytes 3 to N-1 : message contents
Byte N : Checksum

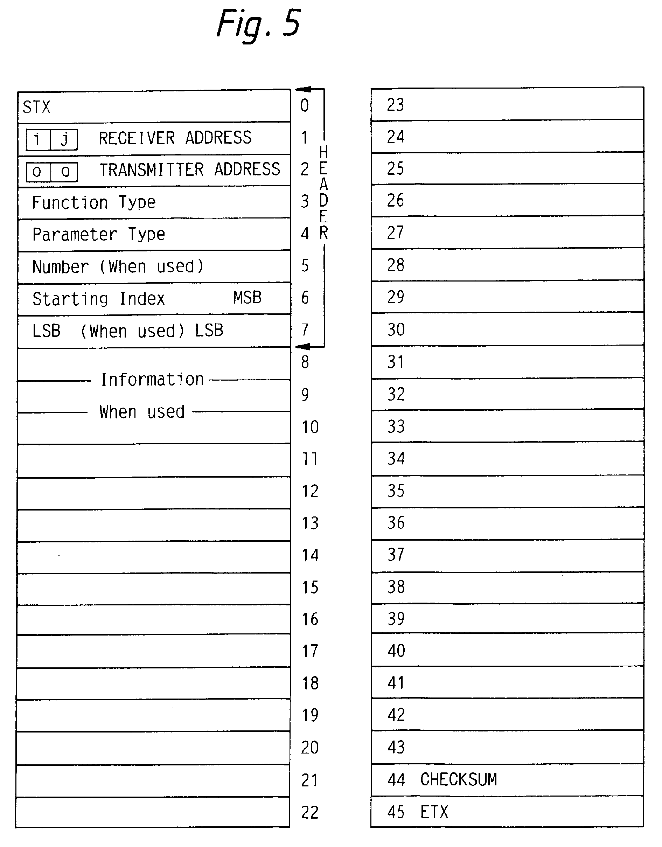

The structure of the ring bus messages is also shown in Figure 5, wherein "i" is the message status, such that "O" indicates "message empty", and "1" indicates "message full"; also, "j" is the message travel such that "0" indicates "direct message erased by the receiver" and "1" indicates "circular message, erased by the transmitter".

The specification and the software of the intermodule communication are written in such a way that they are reusable, maintainable and user friendly:
- The only commands are : read a data, write a data, read a configuration parameter, write a configuration parameter, read a status, write a status, change the recorder mode.
- The data, parameters, status addresses and sizes are gathered in tables. So adding, suppressing, modifying data exchanges only consists in correcting the tables.
- The engineers developing each module software just have to call subroutines to use the intermodule communication.

Up to 63 modules can be connected to the ring bus, and a module can use different types of microprocessors because the only voltages used are Ground (Ov) and Vcc (5v). Moreover, a wholly different recorder can be readily and quickly developed by exchanging just one of the modules (for example, a print module).

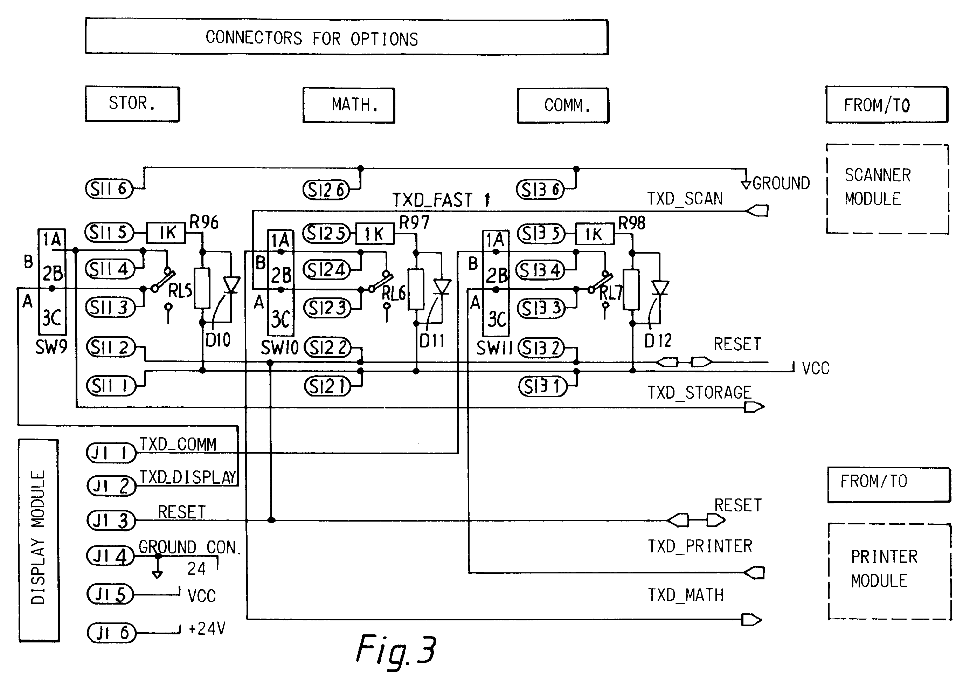

Figure 3 shows an example of a ring bus connection on the standard version of the recorder, providing the user the posibility of easily connecting/disconnecting optional modules with the ring bus. The arrangement enables manual switching and/or automatic switching. In the manual operation, a switch (e.g. SW10 for the math or processing activities) is removed; in the automatic operation, a relay (e.g. RL6 for the math or processing activities) is used to provide auto-connection. Figure 4 shows an independant module with its connection to the ring bus.

Chart recorder 21 provides minimisation of cost for all versions, but especially the basic model. Moreover, a short development leadtime is possible by virtue of the design architecture of the present invention as it allows the development to be divided into sub-projects linked by the communication, providing easy parallel design and decreasing technical and coordination complexity and risk. Also, of course, the ring bus allows increase of the product capabilities, adding "intelligent" options on the ring without increasing the basic version cost.

## Claims

1. Apparatus for the recording of information, the apparatus comprising means (3) to process information input to the apparatus and means (4) to produce a permanent visible representation of information from the processing means, characterised in that the apparatus comprises a plurality of functionally different electronic elements (2, 3, 4, 5, 11, 12) each having data storage means (7) and microprocessor means (6) for data processing, and serial ring means (9) to link the elements within a single apparatus using a p.c.b.-based serial ring configuration between the electronic elements.

2. Apparatus according to Claim 1, characterised in that one of the electronic elements (3) comprises means (6, 7, 8) to process information input to the apparatus, another of the electronic elements (4) comprises means to produce a permanent visible representation of information from the processing means.

3. Apparatus according to any preceding Claim characterised in that the apparatus comprises chart recorder apparatus with electronic means (4) comprising means to print a chart recording information from the processing means.

4. Apparatus according to any preceding Claim, characterised in that a further one of said electronic elements (5) comprises means to provide a display of information from the means to process information and/or of information from other of the electronic elements.

5. Apparatus according to any preceding Claim characterised in that a further one of said electronic elements (11) comprises means to effect further processing and/or alternative processing on information input to the apparatus.

6. Apparatus according to any preceding Claim, characterised in that a further one of said electronic elements (12) comprises means to provide a communication link protocol with other apparatus.

7. Apparatus according to any preceding Claim characterised in that the serial ring means (9) comprises a two-wire ring suited to a token handing-on protocol for the transfer of signals.

8. Apparatus according to any preceding Claim characterised in that one or more electronic elements comprises interface means (8) to convert signals, which are processed within the element(s), into a format suitable for communication on the bus.

9. Apparatus according to any preceding Claim, characterised in that the apparatus has interface means to convert signals, which are in a format suitable for communication on the bus, into a format suitable for processing in one or more electronic elements.

## Patentansprüche

1. Gerät zur Informationsaufzeichnung, welches Gerät umfaßt: eine Einrichtung (3) zur Verarbeitung von Eingangsinformation des Gerätes und eine Einrichtung (4) zur Erzeugung einer permanenten sichtbaren Informationsdarstellung durch die Verarbeitungseinrichtung, **dadurch gekenn****zeichnet**, daß das Gerät umfaßt: mehrere funktionell unterschiedliche elektronische Komponenten (2,3,4,5,11,12), von denen jede eine Datenspeichereinrichtung (7) und einen Mikroprozessor (6) für die Datenverarbeitung besitzt und einen seriellen Ring (9) zur Verbindung der Elemente innerhalb eines einzelnen Gerätes unter Verwendung einer auf einer gedruckten Schaltungsplatine (p.c.b.) basierenden seriellen Ringkonfiguration zwischen den elektronischen Elementen.

2. Gerät nach Anspruch 1, **dadurch gekenn****zeichnet**, daß eines der elektronischen Elemente (3) Einrichtungen (6,7,8) zur Verarbeitung von Eingangsinformation des Gerätes umfaßt und daß ein anderes der elektronischen Elemente (4) Mittel umfaßt zur Erzeugung einer permanenten sichtbaren Informationsdarstellung von der Verarbeitungseinrichtung.

3. Gerät nach irgendeinem vorangehenden Anspruch, **dadurch gekennzeichnet**, daß das Gerät einen Schreiber mit elektronischen Einrichtungen (4) umfaßt, der Mittel zum Drucken einer Schreibinformation der Verarbeitungseinrichtung aufweist.

4. Gerät nach irgendeinem vorangehenden Anspruch, **dadurch** **gekennzeichnet**, daß ein weiteres der elektronischen Elemente (5) Mittel zur Vorgabe einer Informationsdarstellung von der Informationsverarbeitungseinrichtung und/oder von Information von anderen elektronischen Elementen umfaßt.

5. Vorrichtung nach irgendeinem vorangehenden Anspruch, **da****durch gekennzeichnet**, daß ein weiteres der elektronischen Elemente (11) Mittel zum Bewirken einer weiteren Verarbeitung und/oder zur alternativen Verarbeitung von Eingangsinformation des Gerätes umfaßt.

6. Gerät nach irgendeinem vorangehenden Anspruch, **dadurch** **gekennzeichnet**, daß ein weiteres der elektronischen Elemente (12) Mittel zur Vorgabe eines Dialogverbindungsprotokolls mit anderen Geräten umfaßt.

7. Gerät nach irgendeinem vorangehenden Anspruch, **dadurch** **gekennzeichnet**, daß der serielle Ring (9) einen Zweidrahtring umfaßt, der für ein Token-Weitergabeprotokoll für die Signalübertragung geeignet ist.

8. Gerät nach irgendeinem vorangehenden Anspruch, **dadurch gekennzeichnet**, daß ein oder mehrere elektronische Elemente eine Schnittstelleneinrichtung (8) zur Umwandlung von Signalen, die innerhalb der Elemente verarbeitet werden, in ein für den Dialog auf dem Bus geeignetes Format umfassen.

9. Gerät nach irgendeinem vorangehenden Anspruch, **da****durch gekennzeichnet**, daß das Gerät eine Schnittstelleneinrichtung umfaßt zur Umwandlung von Signalen, die sich in einem für den Dialog auf dem Bus geeigneten Format befinden, in ein Format, das für die Verarbeitung in einem oder mehreren elektronischen Elementen geeignet ist.

## Revendications

1. Appareil d'enregistrement d'information, l'appareil comprenant un moyen (3) pour traiter une information entrée sur l'appareil et un moyen (4) pour produire une représentation visible permanente d'une information en provenance du moyen de traitement, caractérisé en ce que l'appareil comprend une pluralité d'éléments électroniques fonctionnellement différents (2, 3, 4, 5, 11, 12) dont chacun comporte un moyen de stockage de données (7) et un moyen de microprocesseur (6) pour traiter les données et un moyen d'anneau série (9) pour relier les éléments à l'intérieur d'un unique appareil en utilisant une configuration en anneau série réalisée sur carte de circuit imprimé entre les éléments électroniques.

2. Appareil selon la revendication 1, caractérisé en ce que l'un des éléments électroniques (3) comprend un moyen (6, 7, 8) pour traiter une information entrée sur l'appareil et un autre des éléments électroniques (4) comprend un moyen pour produire une représentation visible permanente d'une information en provenance du moyen de traitement.

3. Appareil selon l'une quelconque des revendications précédentes, caractérisé en ce que l'appareil comprend un appareil enregistreur de diagramme muni d'un moyen électronique (4) comprenant un moyen pour imprimer un diagramme qui enregistre l'information en provenance du moyen de traitement.

4. Appareil selon l'une quelconque des revendications précédentes, caractérisé en ce qu'encore un autre desdits éléments électroniques (5) comprend un moyen pour produire un affichage d'une information en provenance du moyen pour traiter l'information et/ou une information en provenance d'un autre des éléments électroniques.

5. Appareil selon l'une quelconque des revendications précédentes, caractérisé en ce qu'encore un autre desdits éléments électroniques (11) comprend un moyen pour effectuer un traitement supplémentaire et/ou un autre traitement sur une information entrée sur l'appareil.

6. Appareil selon l'une quelconque des revendications précédentes, caractérisé en ce qu'un autre desdits éléments électroniques (12) comprend un moyen pour produire un protocole de liaison de communication avec un autre appareil.

7. Appareil selon l'une quelconque des revendications précédentes, caractérisé en ce que le moyen d'anneau série (9) comprend un anneau à deux fils qui convient pour un protocole de dépôt à jeton pour le transfert de signaux.

8. Appareil selon l'une quelconque des revendications précédentes, caractérisé en ce que l'un des éléments électroniques ou plusieurs de ceux-ci comprennent un moyen d'interface (8) pour convertir des signaux qui sont traités à l'intérieur de l'élément ou des éléments selon un format qui convient pour une communication sur le bus.

9. Appareil selon l'une quelconque des revendications précédentes, caractérisé en ce que l'appareil comporte un moyen d'interface pour convertir des signaux qui se présentent sous un format qui convient pour une communication sur le bus en un format qui convient pour un traitement dans l'un des éléments électroniques ou dans plusieurs de ceux-ci.
